(19) Europäisches Patentamt
European Patent Office
Office européen des brevets

(11) **EP 4 723 706 A1**

(12) **EUROPEAN PATENT APPLICATION**
published in accordance with Art. 153(4) EPC

(43) Date of publication:
08.04.2026 Bulletin 2026/15

(21) Application number: 24818303.0

(22) Date of filing: 08.03.2024

(51) International Patent Classification (IPC):
*H04W 12/041* (2021.01)   *H04L 9/08* (2006.01)

(52) Cooperative Patent Classification (CPC):
H04L 9/08; H04L 9/32; H04L 9/40; H04W 12/041

(86) International application number:
PCT/CN2024/080664

(87) International publication number:
WO 2024/250766 (12.12.2024 Gazette 2024/50)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 05.06.2023 CN 202310656508

(71) Applicant: **Datang Mobile Communications
Equipment Co., Ltd.
Beijing 100085 (CN)**

(72) Inventors:
• **BAO, Shihan
Beijing 100085 (CN)**
• **XU, Hui
Beijing 100085 (CN)**

(74) Representative: **Studio Torta S.p.A.
Via Viotti, 9
10121 Torino (IT)**

(54) **INFORMATION RECONCILIATION METHOD FOR KEY GENERATION, KEY GENERATION METHOD, APPARATUS, AND DEVICE**

(57)    The present disclosure provides an information reconciliation method for generating a key, a key generation method, apparatus and device. The method includes: a blockchain accounting node obtaining a digital signal corresponding to phase information of a channel response, where the digital signal includes: a first digital signal corresponding to phase information obtained by a first device; a second digital signal corresponding to phase information obtained by a second device; the second device is a communication peer device of the first device; determining a correct order of difference bits between the first digital signal and the second digital signal; and entering the correct order of the difference bits, an electronic certificate of the first device, and an electronic certificate of the second device into a smart contract of a blockchain device.

a blockchain accounting node obtaining a digital signal corresponding to phase information of a channel response, where the digital signal includes: a first digital signal corresponding to phase information obtained by a first device; a second digital signal corresponding to phase information obtained by a second device — 101

the blockchain accounting node determining a correct order of difference bits between the first digital signal and the second digital signal — 102

the blockchain accounting node entering the correct order of the difference bits, an electronic certificate of the first device, and an electronic certificate of the second device into a smart contract of a blockchain device — 103

FIG. 1

## Description

## CROSS-REFERENCE TO RELATED APPLICATION

This disclosure claims priority to the Chinese Patent Application No. 202310656508.6 filed with the China Patent Office on June 5, 2023, entitled "INFORMATION RECONCILIATION METHOD FOR GENERATING KEY, KEY GENERATION METHOD, APPARATUS AND DEVICE", the entire content of which is incorporated herein by reference.

## TECHNICAL FIELD

The present disclosure relates to the field of communication technology, and in particular, to an information reconciliation method for generating a key, a key generation method, apparatus and device.

## BACKGROUND

In mobile communication networks of the post-5G era, some devices in ubiquitous wireless sensor networks have very limited computing and storage capabilities or lack key management facilities. A key for encrypting messages is generated through the key generation technology based on physical layer security using the randomness and reciprocity of the wireless channel. In a key generation system of the related art, information reconciliation adopts a fixed key reconciliation scheme, which cannot be adapted to the real-time changing channel state. When the channel state information changes drastically, the generated key may have a high error rate.

## SUMMARY

The purpose of the present disclosure is to provide an information reconciliation method for generating a key, a key generation method, apparatus and device, to solve the problem of inaccurate keys generated by information reconciliation schemes in key generation systems of related technologies.

An embodiment of the present disclosure provides an information reconciliation method for generating a key, comprising:

a blockchain accounting node obtaining a digital signal corresponding to phase information of a channel response, wherein the digital signal comprises: a first digital signal corresponding to phase information obtained by a first device; a second digital signal corresponding to phase information obtained by a second device; the second device is a communication peer device of the first device;

the blockchain accounting node determining a correct order of difference bits between the first digital signal and the second digital signal;

the blockchain accounting node entering the correct order of the difference bits, an electronic certificate of the first device, and an electronic certificate of the second device into a smart contract of a blockchain device.

In some embodiments, the obtaining a digital signal corresponding to phase information of a channel response comprises at least one of the following:

receiving a first data packet sent by the first device, wherein the first data packet comprises the first digital signal and the electronic certificate of the first device, the first digital signal is a digital signal obtained by encryption based on a public key of the blockchain accounting node;

receiving a second data packet sent by the second device, wherein the second data packet comprises the second digital signal and the electronic certificate of the second device, the second digital signal is a digital signal obtained by encryption based on the public key of the blockchain accounting node.

In some embodiments, the method further comprises:

verifying credibility of the electronic certificate of the first device and the electronic certificate of the second device respectively according to a certificate revocation list (CRL) of a trusted authority (TA);

ignoring the digital signal corresponding to the electronic certificate if the CRL comprises the electronic certificate; and determining that verification of the electronic certificate is successful if the CRL does not comprise the electronic certificate.

In some embodiments, the determining a correct order of difference bits between the first digital signal and the second digital signal comprises:

comparing the first digital signal and the second digital signal to obtain a comparison result;

determining the difference bits between the first digital signal and the second digital signal according to the comparison result;

determining the correct order of the difference bits.

In some embodiments, the determining the correct order of the difference bits comprises:

determining the correct order of the difference bits in a case where it is determined according to the comparison result that the number of identical bits between the first digital signal and the second digital signal is greater than a first threshold.

An embodiment of the present disclosure provides a key generation method, comprising:

a first device sending a first digital signal corresponding to phase information of a channel response to a blockchain accounting node;

the first device determining a correct order of difference bits between the first digital signal and a second digital signal according to a smart contract of a blockchain, wherein the second digital signal is a digital signal corresponding to phase information of a channel response obtained by a second device;

the first device determining a shared key between the first device and the second device according to the first digital signal and the correct order of the difference bits.

In some embodiments, the method further comprises:

determining the phase information of the channel response according to a first channel sounding sequence sent by the second device;

quantizing the phase information to obtain the first digital signal corresponding to the phase information.

In some embodiments, the method further comprises:
obtaining the smart contract published by a blockchain device.

In some embodiments, the determining a shared key between the first device and the second device according to the first digital signal and the correct order of the difference bits comprises:
reconciling the first digital signal according to the correct order of the difference bits to obtain the shared key.

An embodiment of the present disclosure provides a key generation method, comprising:

a second device sending a second digital signal corresponding to phase information of a channel response to a blockchain accounting node;

the second device determining a correct order of difference bits between the second digital signal and a first digital signal according to a smart contract of a blockchain, wherein the first digital signal is a digital signal corresponding to phase information of a channel response obtained by a first device;

the second device determining a shared key between the first device and the second device according to the second digital signal and the correct order of the difference bits.

In some embodiments, the method further comprises:

determining the phase information of the channel response according to a second channel sounding sequence sent by the first device;

quantizing the phase information to obtain the second digital signal corresponding to the phase information.

In some embodiments, the determining a shared key between the first device and the second device according to the second digital signal and the correct order of the difference bits comprises:
reconciling the second digital signal according to the correct order of the difference bits to obtain the shared key.

An embodiment of the present disclosure provides an information reconciliation system for generating a key, comprising:

a blockchain device;

a blockchain accounting node, communicatively connected with the blockchain device;

a device, communicatively connected with the blockchain device and the blockchain accounting node, respectively, wherein the device comprises a first device and a second device, the second device is a communication peer device of the first device;

wherein the first device is configured to send a first digital signal corresponding to phase information of a channel response to the blockchain accounting node; the second device is configured to send a second digital signal corresponding to the phase information of the channel response to the blockchain accounting node;

the blockchain accounting node is configured to determine a correct order of difference bits between the first digital signal and the second digital signal; and enter the correct order of the difference bits, an electronic certificate of the first device, and an electronic certificate of the second device into a smart contract of the blockchain device;

the blockchain device is configured to publish the smart contract.

An embodiment of the present disclosure provides a network device, comprising: a memory, a transceiver, and a processor:

wherein the memory is configured to store a computer program; the transceiver is configured to receive and transmit data under the control of the processor; and the processor is configured to read the computer program in the memory and perform following operations:

obtaining a digital signal corresponding to phase information of a channel response, wherein the digital signal comprises: a first digital signal corresponding to phase information obtained by a first device; a second digital signal corresponding to phase information obtained by a second device; the second device is a communication peer device of the first device;

determining a correct order of difference bits between the first digital signal and the second digital signal;

entering the correct order of the difference bits, an electronic certificate of the first device, and an electronic certificate of the second device into a smart contract of a blockchain device.

In some embodiments, the processor is configured to read the computer program in the memory and perform at least one of the following operations:

receiving a first data packet sent by the first device, wherein the first data packet comprises the first digital signal and the electronic certificate of the first device, the first digital signal is a digital signal obtained by encryption based on a public key of a blockchain accounting node;

receiving a second data packet sent by the second device, wherein the second data packet comprises the second digital signal and the electronic certificate of the second device, the second digital signal is a digital signal obtained by encryption based on the public key of the blockchain accounting node.

In some embodiments, the processor is configured to read the computer program in the memory and perform following operations:

verifying credibility of the electronic certificate of the first device and the electronic certificate of the second device respectively according to a certificate revocation list (CRL) of a trusted authority (TA);

ignoring the digital signal corresponding to the electronic certificate if the CRL comprises the electronic certificate; and determining that verification of the electronic certificate is successful if the CRL does not comprise the electronic certificate.

In some embodiments, the processor is configured to read the computer program in the memory and perform following operations:

comparing the first digital signal and the second digital signal to obtain a comparison result;

determining the difference bits between the first digital signal and the second digital signal according to the comparison result;

determining the correct order of the difference bits.

In some embodiments, the processor is configured to read the computer program in the memory and perform following operations:

determining the correct order of the difference bits in a case where it is determined according to the comparison result that the number of identical bits between the first digital signal and the second digital signal is greater than a first threshold.

An embodiment of the present disclosure provides a terminal, comprising: a memory, a transceiver, and a processor:

wherein the memory is configured to store a computer program; the transceiver is configured to receive and transmit data under the control of the processor; and the processor is configured to read the computer program in the memory and perform following operations:

sending a first digital signal corresponding to phase information of a channel response to a blockchain accounting node;

determining a correct order of difference bits between the first digital signal and a second digital signal according to a smart contract of a blockchain, wherein the second digital signal is a digital signal corresponding to phase information of a channel response obtained by a second device;

determining a shared key between the first device and the second device according to the first digital signal and the correct order of the difference bits.

In some embodiments, the processor is configured to read the computer program in the memory and perform following operations:

determining the phase information of the channel response according to a first channel sounding sequence sent by the second device;

quantizing the phase information to obtain the first digital signal corresponding to the phase information.

In some embodiments, the processor is configured to read the computer program in the memory and perform following operations:
obtaining the smart contract published by a blockchain device.

In some embodiments, the processor is configured to read the computer program in the memory and perform following operations:
reconciling the first digital signal according to the correct order of the difference bits to obtain the shared key.

An embodiment of the present disclosure provides a terminal, comprising: a memory, a transceiver, and a processor:
wherein the memory is configured to store a computer program; the transceiver is configured to receive and transmit data under the control of the processor; and the processor is configured to read the computer program in the memory and perform following operations:

sending a second digital signal corresponding to phase information of a channel response to a blockchain accounting node;

determining a correct order of difference bits between the second digital signal and a first digital signal according to a smart contract of a blockchain, wherein the first digital signal is a digital signal corresponding to phase information of a channel response obtained by a first device;

determining a shared key between the first device and the second device according to the second digital signal and the correct order of the difference bits.

In some embodiments, the processor is configured to read the computer program in the memory and perform following operations:

determining the phase information of the channel response according to a second channel sounding sequence sent by the first device;
quantizing the phase information to obtain the second digital signal corresponding to the phase information.

In some embodiments, the processor is configured to read the computer program in the memory and perform following operations:
reconciling the second digital signal according to the correct order of the difference bits to obtain the shared key.

An embodiment of the present disclosure provides an information reconciliation apparatus for generating a key, comprising:

a first obtaining unit, configured to obtain a digital signal corresponding to phase information of a channel response, wherein the digital signal comprises: a first digital signal corresponding to phase information obtained by a first device; a second digital signal corresponding to phase information obtained by a second device; the second device is a communication peer device of the first device;
a first determining unit, configured to determine a correct order of difference bits between the first digital signal and the second digital signal;
a recording module, configured to enter the correct order of the difference bits, an electronic certificate of the first device, and an electronic certificate of the second device into a smart contract of a blockchain device.

An embodiment of the present disclosure provides a key generation apparatus, comprising:

a first sending unit, configured to send a first digital signal corresponding to phase information of a channel response to a blockchain accounting node;
a second determining unit, configured to determine a correct order of difference bits between the first digital signal and a second digital signal according to a smart contract of a blockchain, wherein the second digital signal is a digital signal corresponding to phase information of a channel response obtained by a second device;
a third determining unit, configured to determine a shared key between the first device and the second device according to the first digital signal and the correct order of the difference bits.

An embodiment of the present disclosure provides a key generation apparatus, comprising:

a second sending unit, configured to send a second digital signal corresponding to phase information of a channel response to a blockchain accounting node;
a fourth determining unit, configured to determine a correct order of difference bits between the second digital signal and a first digital signal according to a smart contract of a blockchain, wherein the first digital signal is a digital signal corresponding to phase information of a channel response obtained by a first device;
a fifth determining unit, configured to determine a shared key between the first device and the second device according to the second digital signal and the correct order of the difference bits.

An embodiment of the present disclosure provides a processor-readable storage medium, storing a computer program, wherein the computer program, when executed by a processor, implements the steps of the information reconciliation method for generating a key described above.

An embodiment of the present disclosure provides a processor-readable storage medium, storing a computer program, wherein the computer program, when executed by a processor, implements the steps of the key generation method described above.

The beneficial effects of the above technical solution disclosed in the present disclosure are as follows.

In embodiments of the present disclosure, a blockchain accounting node obtains digital signals corresponding to phase information obtained by a first device and a second device respectively, determines a correct order of difference bits based on the digital signals of the first device and the second device, thereby reconciling the difference bits to obtain the correct order, and writes the correct bit order into a smart contract and publishes it through the smart contract. Using the blockchain accounting node as a third party to reconcile information in key generation for ubiquitous network devices avoids the use of ubiquitous network terminal devices under resource-constrained conditions for information reconciliation, can reduce device energy consumption, ensure the accuracy of key generation, and at the same time avoid information leakage due to key negotiation between two communication devices when a secure and trusted connection is not established, thereby ensuring the security of communication information.

**BRIEF DESCRIPTION OF THE DRAWINGS**

FIG. 1 is a first flowchart of an information reconciliation method for generating a key according to an embodiment of the present disclosure;

FIG. 2 is a schematic diagram showing the architecture of an information reconciliation system for generating a key according to an embodiment of the present disclosure;

FIG. 3 is a second flowchart of an information reconciliation method for generating a key according to an embodiment of the present disclosure;

FIG. 4 is a schematic diagram showing a communication process according to an embodiment of the present disclosure;

FIG. 5 is a first flowchart of an key generation method according to an embodiment of the present disclosure;

FIG. 6 is a second flowchart of an key generation method according to an embodiment of the present disclosure;

FIG. 7 is a schematic diagram showing the structure of an information reconciliation apparatus for generating a key according to an embodiment of the present disclosure;

FIG. 8 is a first structural diagram of a key generation apparatus according to an embodiment of the present disclosure;

FIG. 9 is a second structural diagram of a key generation apparatus according to an embodiment of the present disclosure;

FIG. 10 is a schematic diagram showing the structure of a network device according to an embodiment of the present disclosure;

FIG. 11 is a first structural diagram of a terminal according to an embodiment of the present disclosure;

FIG. 12 is a second structural diagram of a terminal according to an embodiment of the present disclosure.

## DETAILED DESCRIPTION

In order to make the technical problems to be solved by the present disclosure, technical solutions and advantages clearer, a detailed description will be given below with reference to the accompanying drawings and specific embodiments. In the following description, specific details such as detailed configuration and components are provided only to assist in a comprehensive understanding of the embodiments of the present disclosure. Accordingly, it will be apparent to those of ordinary skill in the art that various changes and modifications of the embodiments described herein may be made without departing from the scope and spirit of the disclosure. In addition, descriptions of well-known functions and constructions are omitted for clarity and conciseness.

It should be understood that reference throughout this specification to "one embodiment" or "an embodiment" means that a particular feature, structure, or characteristic related to the embodiment is included in at least one embodiment of the present disclosure. Thus, the appearances of "in one embodiment" or "in an embodiment" in various places throughout this specification are not necessarily referring to the same embodiment. Furthermore, the particular feature, structure, or characteristic may be combined in any suitable manner in one or more embodiments.

In various embodiments of the present disclosure, it should be understood that values of serial numbers of following processes do not mean an execution order. The execution order of the processes should be determined by functions and internal logics thereof, and should not constitute any limitation on the implementation process of the embodiments of the present disclosure.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In the embodiments of the present disclosure, the term "a plurality of (multiple)" refers to two or more than two, and other quantifiers are similar thereto.

The technical solutions in the embodiments of the present disclosure will be clearly and completely described below in conjunction with the drawings in the embodiments of the present disclosure. Obviously, the described embodiments are only part of the embodiments of the present disclosure, not all of the embodiments. Based on the embodiments of the present disclosure, all other embodiments obtained by those skilled in the art without creative efforts shall fall within the scope of protection of the present disclosure.

Embodiments of the present disclosure provide an information reconciliation method for generating a key, a key generation method, apparatus and device, to solve the problem of inaccurate keys generated by information reconciliation schemes in key generation systems of related technologies.

The method and the device are based on the same application concept. Since the principles of solving problems by the method and the device are similar, the implementation of the device and the method can refer to each other, and the repeated parts will not be repeated.

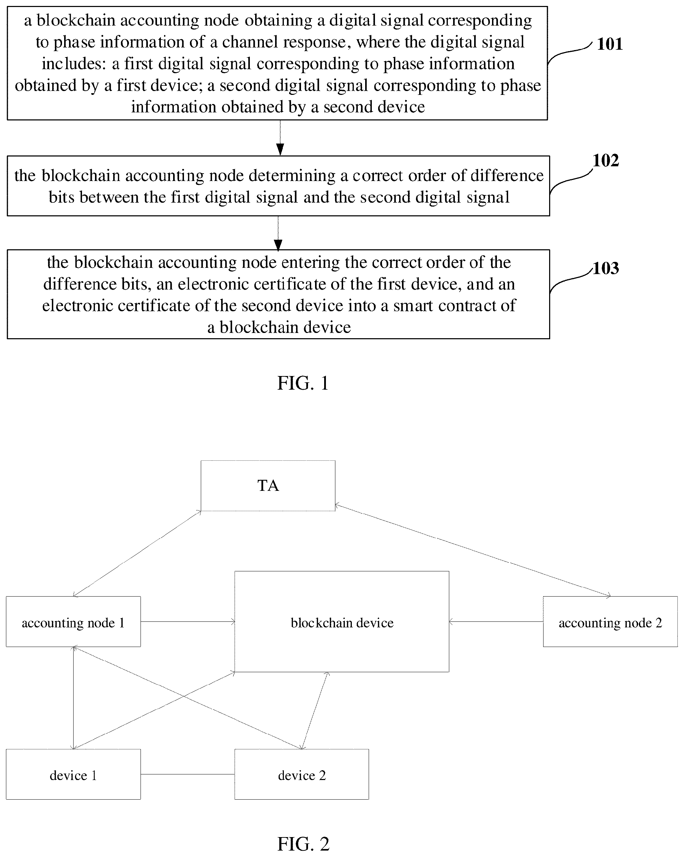

As shown in FIG. 1, an embodiment of the present disclosure provides an information reconciliation method for generating a key, applied to a blockchain accounting node and specifically including following steps:

Step 101: a blockchain accounting node obtaining a digital signal corresponding to phase information of a channel response, where the digital signal includes: a first digital signal corresponding to phase information obtained by a first device; a second digital signal corresponding to phase information obtained by a second device; the second device is a communication peer device of the first device.

The blockchain accounting node is a main node of a blockchain network, which is configured to provide computing power, operation and maintenance, and publish accounting information for the blockchain network; the blockchain accounting node may communicate with the device and provide authentication and information reconciliation capabilities for the device.

The first device and the second device may be terminals, and the second device is a communication peer device of the first device. The first device and the second device may be ubiquitous Internet of Things devices. During the system initialization phase, the first device and the second device need to register with a trusted authority (TA), which distributes a public-private key pair and a corresponding electronic certificate to each device. The first device and the second device respectively verify each other's electronic certificate, determine the phase information of the channel response using the channel sounding sequence if the verification is successful, and determine the digital signal corresponding to the phase information. The digital signal may be obtained by quantizing the phase information.

For example, the first device determines the phase information of the channel response according to the channel sounding sequence sent by the second device, and quantizes the phase information to obtain the first digital signal. The second device determines the phase information of the channel response according to the channel sounding sequence sent by the first device, and quantizes the phase information to obtain the second digital signal. The first device and the second device may upload the first digital signal and the second digital signal obtained by quantization to the blockchain accounting node for the blockchain accounting node to perform information reconciliation.

Step 102: the blockchain accounting node determining a correct order of difference bits between the first digital signal and the second digital signal;

Step 103: the blockchain accounting node entering the correct order of the difference bits, an electronic certificate of the first device, and an electronic certificate of the second device into a smart contract of a blockchain device.

The blockchain accounting node may compare the difference bits between the first digital signal and the second digital signal, thereby reconciling the difference bits to obtain the correct bit order. The blockchain accounting node writes the correct bit order and the electronic certificates of the first device and the second device into the smart contract, and publishes the correct bit order through the smart contract.

In embodiments of the present disclosure, a blockchain accounting node obtains digital signals corresponding to phase information obtained by a first device and a second device respectively, determines a correct order of difference bits based on the digital signals of the first device and the second device, thereby reconciling the difference bits to obtain the correct order, and writes the correct bit order into a smart contract and publishes it through the smart contract. Using the blockchain accounting node as a third party to reconcile information in key generation for ubiquitous network devices avoids the use of ubiquitous network terminal devices under resource-constrained conditions for information reconciliation, can reduce device energy consumption, ensure the accuracy of key generation, and at the same time avoid information leakage due to key negotiation between two communication devices when a secure and trusted connection is not established, thereby ensuring the security of communication information.

In some embodiments, the architecture of an information reconciliation system for generating a key in an embodiment of the present disclosure is shown in FIG. 2, and may include multiple blockchain accounting nodes, blockchain devices, devices, and a trusted authority (TA). The devices are ubiquitous network terminal devices that have the ability to communicate between devices, with accounting nodes, and blockchain networks. In a blockchain network, terminal devices do not participate in the operation and maintenance of the blockchain and may only view the public data of the blockchain network.

A blockchain device refers to a blockchain network platform participated by blockchain accounting nodes and ubiquitous network devices, and is a distributed, decentralized electronic account book, which may also be called a blockchain platform. The trusted authority (TA) has the abilities to initialize system parameters, register network nodes, and publish key information and electronic certificates. The TA is not directly connected with the blockchain network.

In some embodiments, the TA first initializes each node and device in the system, and first selects its own public-private key pair (Sk$_{TA}$, Pk$_{TA}$). Specifically, the TA runs the key generation algorithm as the key administrator to generate a public-private key pair (pk, sk); signs the private key sk: $Sk_i \in Z_q^*$, $Z_q^*$ is the number set {1...,q-1}, q is a large prime number; signs the public key pk: Pk$_i$ = G * Sk$_i \in$ G, where G is a cyclic subgroup in the finite group G'. The TA distributes the signed public-private key pair to each device. The TA publishes public parameters, which include: prime cyclic group, order, generator, and hash function; where the public parameters are preset values and may be determined by mutual negotiation among the systems participating in the communication. The first device and the second device participating in the communication are registered with the TA respectively. The TA distributes the public-private key pair and a corresponding electronic certificate to the first device and the second device. The electronic certificate may be used as an identity identifier for the device to access the system in the network.

The device registers with the TA and uploads the device identifier and public key (ID, $Pk_i$) to the TA. After verification, the TA sends the corresponding certificate $cert_i \leftarrow Sign (Sk_i, Pk_i, time, ID_i)$ to the device. The first device and the second device verify each other's electronic certificates to ensure that a legal connection is established between the two devices.

In some embodiments, the process of the first device and the second device verifying each other's electronic certificates is as follows.

It is assumed that the first device 1 and the second device are denoted as N1 and N2 respectively. At time T1, N1 sends a communication request message to N2. The message is electronically signed and attached with the electronic certificate distributed to the device by the key administrator TA. The communication request message includes N1's electronic certificate, the time the message was sent, and N1's electronic signature: $<cert_{N1}, T1, Sign_{N1}>$.

After receiving the communication request message, N2 verifies N1's electronic certificate. If the verification is successful, N2 replies with a communication response message, which includes N2's electronic certificate, information sending time, and N2's electronic signature: $<cert_{N2}, T2, Sign_{N2}>$.

N1 verifies N2's electronic certificate. If both parties pass the verification, it means that a legal connection has been established. In some embodiments, the first device and the second device may verify whether the certificate is authentic based on a certificate revocation list provided by the TA. In some embodiments, when the electronic certificate is verified, the electronic signature may also be verified using the public key. When the electronic signature is also verified, it is considered that a legal connection has been established between the two communication devices.

In some embodiments, the first device and the second device complete initial authentication of communication by verifying electronic certificates. The first device and the second device obtain the digital signal corresponding to the phase information through the channel sounding sequence and the phase quantization method respectively.

As an optional embodiment, the obtaining a digital signal corresponding to phase information of a channel response includes at least one of the following:

receiving a first data packet sent by the first device, where the first data packet includes the first digital signal and the electronic certificate of the first device, the first digital signal is a digital signal obtained by encryption based on a public key of the blockchain accounting node;

receiving a second data packet sent by the second device, where the second data packet includes the second digital signal and the electronic certificate of the second device, the second digital signal is a digital signal obtained by encryption based on the public key of the blockchain accounting node.

In this embodiment, the first device and the second device respectively use the public key of the blockchain accounting node to encrypt the digital signal corresponding to the phase information of the channel response, and attach their respective electronic certificates and then send to the blockchain accounting node.

In some embodiments, the method further includes: verifying credibility of the electronic certificate of the first device and the electronic certificate of the second device respectively according to a certificate revocation list (CRL) of a trusted authority (TA); ignoring the digital signal corresponding to the electronic certificate if the CRL includes the electronic certificate; and determining that verification of the electronic certificate is successful if the CRL does not include the electronic certificate.

In this embodiment, when receiving the first data packet sent by the first device and/or the second data packet sent by the second device, the blockchain accounting node may verify whether the electronic certificate of each device is credible by querying the certificate revocation list provided by the TA. Specifically, if the certificate revocation list includes the electronic certificate of the first device and/or the electronic certificate of the second device, it means that the verification fails, and the blockchain accounting node ignores the message from the first device and/or the second device.

As an optional embodiment, the determining a correct order of difference bits between the first digital signal and the second digital signal includes:
comparing the first digital signal and the second digital signal to obtain a comparison result; determining the difference bits between the first digital signal and the second digital signal according to the comparison result; and determining the correct order of the difference bits.

In some embodiments, the determining the correct order of the difference bits includes: determining the correct order of the difference bits in a case where it is determined according to the comparison result that the number of identical bits between the first digital signal and the second digital signal is greater than a first threshold.

The first threshold may be set according to the requirements of information reconciliation. When the number of identical bits between the first digital signal and the second digital signal is greater than the first threshold, it means that the difference between the first digital signal and the second digital signal is small, and the blockchain accounting node may reconcile the digital signal to obtain the correct bit order. In some embodiments, if the number of identical bits between the first digital signal and the second digital signal is less than the first threshold, it means that the difference between the first digital signal and the second digital signal is large, the blockchain accounting node may abandon the information reconciliation.

In this embodiment, the blockchain accounting node compares the first digital signal and the second digital signal to determine the difference bits, and performs an information reconciliation operation to obtain the correct order of the difference bits. The blockchain accounting node may write the correct order of the difference bits and the electronic certificates of the first device and the second device into the smart contract of the blockchain and publish it through the blockchain network.

The first device and the second device may obtain the correct bit order by calling the smart contract command, thereby determining the shared key of the first device and the second device. The first device may use the shared key to encrypt information, and the second device may use the shared key to decrypt the information after receiving the information.

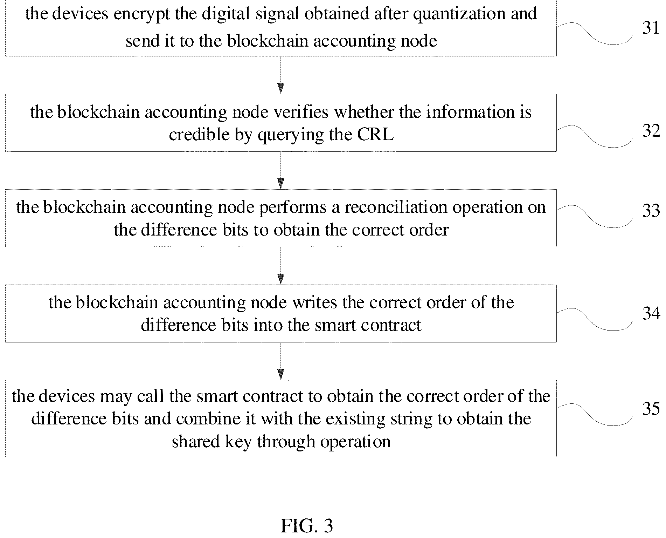

In an embodiment of the present disclosure, the implementation process of information reconciliation for generating a key by a blockchain accounting node is shown in FIG. 3 and may include:

Step 31: the first device and the second device each encrypt the digital signal (the digital signal is a string of bit information) obtained after quantization and send it to the blockchain accounting node;

Step 32: the blockchain accounting node verifies whether the information is credible by querying the CRL;

Step 33: the blockchain accounting node performs a reconciliation operation on the difference bits to obtain the correct order of the difference bits;

Step 34: the blockchain accounting node writes the correct order of the difference bits into the smart contract;

Step 35: the first device and the second device may call the smart contract to obtain the correct order of the difference bits and combine it with the existing string to obtain the shared key through operation.

The following describes the execution process of implementing communication using the information reconciliation method disclosed in the present invention through specific embodiments.

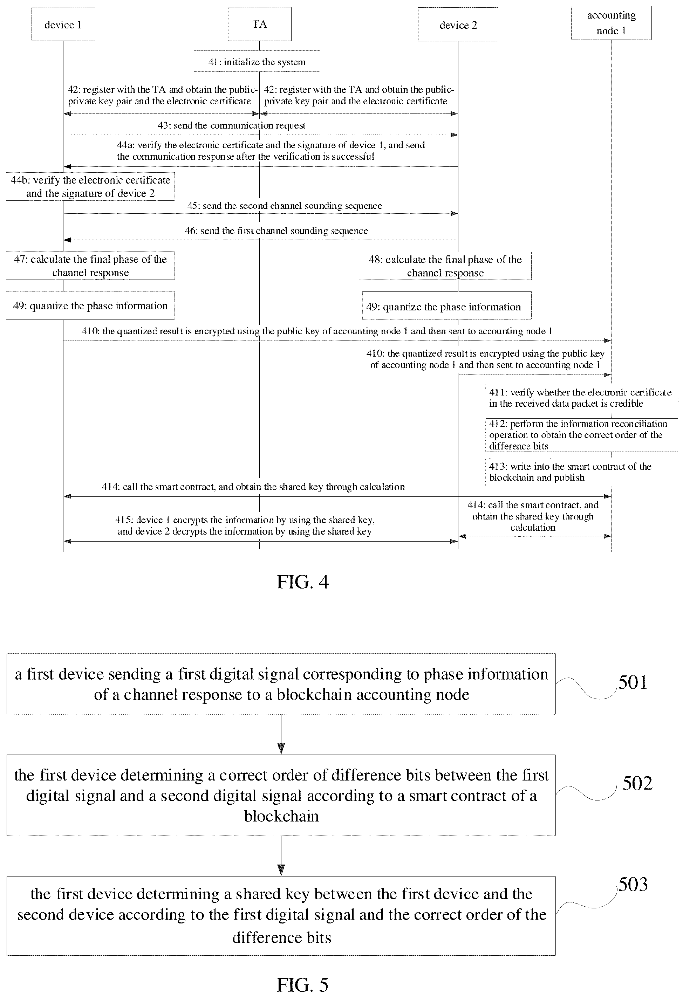

As shown in FIG. 4, this embodiment includes one trusted authority (TA), two blockchain accounting nodes: accounting node 1 and accounting node 2; two ubiquitous Internet of Things devices: device 1 and device 2, both of which are under the management scope of accounting node 1; and also includes a blockchain device. The implementation process includes:

Step 41: The system is initialized. The trusted authority TA selects a public-private key pair $(Sk_{TA}, PK_{TA})$ and publishes public parameters, including the prime cyclic group, order, generator, and hash function;

Step 42: Device 1 and device 2 register their information with the trusted authority TA administrator respectively and obtain the corresponding public-private key pair and electronic certificate, which are represented by $(sk_1, pk_1, cert_{N1})$ and $(sk_2, pk_2, cert_{N2})$ respectively;

Step 43: There is a communication requirement between device 1 and device 2, and the two devices then start initial authentication. At the initial transmission time T1, device 1 sends a communication request to device 2. The communication request uses an electronic signature and is attached with the electronic certificate distributed by TA to the device. The communication request information includes $<cert_{N1}, T1, Sign_{N1}>$.

Step 44a: After receiving the communication request, device 2 verifies the electronic certificate of device 1. The authenticity of the electronic certificate is verified through the certificate revocation list provided by the TA. The electronic signature is verified using the public key $pk_1$. If the verification is successful, device 2 further replies to device 1 with a communication response, which includes $<cert_{N2}, T2, Sign_{N2}>$; if the verification fails, device 2 ignores the communication request.

Step 44b: Device 1 verifies the electronic certificate and electronic signature of device 2 in the same manner as step 44a. If the verification is successful, a legal connection is established between device 1 and device 2. If the verification fails, device 1 ignores the communication response.

Step 45: Device 1 sends a second channel sounding sequence $PS_{N12}$ to device 2. After receiving the signal, device 2 records the second channel sounding sequence as $R_{N12} = \alpha_{12}e^{j(\omega ct+\phi 1+\theta 12)} + \eta_{12}(t)$, where $\alpha_{12}$ is the forward channel gain from the first device to the second device, $\theta_{12}$ is the phase response from the first device to the second device, $\eta_{12}$ is the additive white Gaussian noise from the first device to the second device, and $\varphi_1$ is the initial phase of device 1.

Step 46: Device 2 sends a first channel sounding sequence $PS_{N21}$ to device 1. After receiving the signal, device 1 records the first channel sounding sequence as $R_{N21} = \alpha_{21}e^{j(\omega ct+\phi 2+\theta 21)} + \eta_{21}(t)$, where $\alpha_{21}$ is the forward channel gain from the second device to the first device, $\theta_{21}$ is the phase response from the second device to the first device, $\eta_{21}$ is the additive white Gaussian noise from the second device to the first device, and $\varphi_2$ is the initial phase of device 2.

Step 47: Device 1 calculates the final phase information of the channel response $S_1 = \phi_{21} + \phi_1 \bmod 2\pi$, where $\phi_{21} \approx \phi_2 + \theta_{21}$.

Step 48: Device 2 calculates the final phase information of the channel response $S_2 = \phi_{12} + \phi_2 \bmod 2\pi$, where $\phi_{12} \approx \phi_1 + \theta_{12}$.

Step 49: Device 1 and device 2 quantize the phase information $S_1$ and $S_2$ to obtain digital signals $k_{S1}$ and $k_{S2}$, respectively;

Step 410: Device 1 and device 2 use the public key

$pk_{ad1}$ of accounting node 1 to encrypt the quantized results $k_{S1}$ and $k_{S2}$ respectively to obtain: $Enc_{pk_{ad1}}(k_{S1(2)})$ and $Enc_{pk_{ad1}}(k_{S2(2)})$. Device 1 attaches the electronic certificate of device 1 to the encrypted data packet to obtain: $Enc_{pk_{ad1}}(k_{S1(2)})$, $cert_{N1})$ and sends the data packet to accounting node 1; device 2 attaches the electronic certificate of device 2 to the encrypted data packet to obtain: $Enc_{pk_{ad1}}(k_{S2(2)})$, $cert_{N2})$ and sends the data packet to accounting node 1.

Step 411: Accounting node 1 verifies whether the electronic certificate in the received data packet is credible by querying the certificate revocation list provided by the TA. If the electronic certificate is in the certificate revocation list, accounting node 1 ignores the corresponding device message; otherwise, the electronic certificate verification passes.

Step 412: Accounting node 1 determines whether $k_{S1}$ and $k_{S2}$ have a sufficient proportion of identical bits (e.g., the number of identical bits is greater than a first threshold), and then performs an information reconciliation operation to obtain the correct order of the difference bits $Seq_{1-2} = k_{S1} \oplus k_{S2}$;

Step 413: Accounting node 1 writes $Seq_{1-2}$ and $cert_{N1}$, $cert_{N2}$ into the smart contract of the blockchain and publishes it through the blockchain network;

Step 414: Device 1 and device 2 obtain $Seq_{1-2}$ by calling the smart contract command. Device 1 obtains the shared key $k = k_{S1} \oplus Seq_{1-2}$ through calculation. Device 2 also obtains the shared key $k = k_{S2} \oplus Seq_{1-2}$ through the same calculation.

Step 415: Device 1 encrypts the information by using the shared key k. After receiving the information, device 2 decrypts the information by using the shared key. If the decryption is successful, a secure encrypted communication connection is established; if the decryption fails, device 2 ignores the communication request.

In the embodiments of the present disclosure, by introducing a blockchain network architecture, using the accounting node in the blockchain network as a third party to reconcile information in key generation for ubiquitous network devices can avoid the use of ubiquitous network terminal devices under resource-constrained conditions for information reconciliation and reduce device energy consumption; and can also avoid information leakage due to key negotiation between two devices when a secure and trusted communication is not established.

The communication smart contract publishes key information in information reconciliation, and uses the immutable, open and transparent characteristics of the blockchain to ensure the credibility of the accounting node as a third party. At the same time, because of the programmable system of the smart contract, resource-constrained terminal devices can still call the information published by the smart contract through the program of the smart contract without completely storing the blockchain distributed account book.

In the embodiment of the present disclosure, a blockchain accounting node obtains digital signals corresponding to phase information obtained by a first device and a second device respectively, determines a correct order of difference bits based on the digital signals of the first device and the second device, thereby reconciling the difference bits to obtain the correct order, and writes the correct bit order into a smart contract, which is then published through the smart contract. Using the blockchain accounting node as a third party to reconcile information in key generation for ubiquitous network devices avoids the use of ubiquitous network terminal devices under resource-constrained conditions for information reconciliation, can reduce device energy consumption, ensure the accuracy of key generation, and at the same time avoid information leakage due to key negotiation between two communication devices when a secure and trusted connection is not established, thereby ensuring the security of communication information.

As shown in FIG. 5, an embodiment of the present disclosure further provides a key generation method, applied to a first device and including:

Step 501: a first device sending a first digital signal corresponding to phase information of a channel response to a blockchain accounting node.

Step 502: the first device determining a correct order of difference bits between the first digital signal and a second digital signal according to a smart contract of a blockchain, where the second digital signal is a digital signal corresponding to phase information of a channel response obtained by a second device;

Step 503: the first device determining a shared key between the first device and the second device according to the first digital signal and the correct order of the difference bits.

In this embodiment, the first device and the second device may be terminals, and the second device is a communication peer device of the first device. During the system initialization phase, the first device and the second device need to register with a trusted authority (TA), which distributes a public-private key pair and a corresponding electronic certificate to each device. The first device and the second device respectively verify each other's electronic certificate, determine the phase information of the channel response using the channel sounding sequence if the verification is successful, and determine the digital signal corresponding to the phase information. The digital signal may be obtained by quantizing the phase information.

Specifically, the first device determines the phase information of the channel response according to the channel sounding sequence sent by the second device, and quantizes the phase information to obtain the first digital signal. The second device determines the phase information of the channel response according to the channel sounding sequence sent by the first device, and quantizes the phase information to obtain the second digital signal. The first device and the second device may upload the first digital signal and the second digital signal obtained by quantization to the blockchain accounting node for the blockchain accounting node to perform information reconciliation.

The blockchain accounting node may compare the difference bits between the first digital signal and the second digital signal, thereby reconciling the difference bits to obtain the correct bit order. The blockchain accounting node writes the correct bit order and the electronic certificates of the first device and the second device into the smart contract, and publishes the correct bit order through the smart contract. The first device and the second device may obtain the correct bit order by calling the smart contract and obtain the shared key through calculation based on the existing string.

In the embodiment of the present disclosure, a first device sends a first digital signal corresponding to phase information of a channel response to a blockchain accounting node; the blockchain accounting node determines a correct order of difference bits based on the digital signal of the first device and the digital signal of the second device, thereby reconciling the difference bits to obtain the correct order, and writes the correct bit order into a smart contract and publishes it through the smart contract. In the present disclosure, using the blockchain accounting node as a third party to reconcile information in key generation for ubiquitous network devices avoids the use of ubiquitous network terminal devices under resource-constrained conditions for information reconciliation, can reduce device energy consumption, ensure the accuracy of key generation, and at the same time avoid information leakage due to key negotiation between two communication devices when a secure and trusted connection is not established, thereby ensuring the security of communication information.

As an optional embodiment, the method further includes: determining the phase information of the channel response according to a first channel sounding sequence sent by the second device; and quantizing the phase information to obtain the first digital signal corresponding to the phase information.

In this embodiment, the first device and the second device complete the initial authentication of communication by verifying each other's electronic certificates. After the electronic certificate is verified, the second device sends a first channel sounding sequence to the first device. The first device may determine the phase information of the channel response according to the channel sounding sequence, and quantize the phase information to obtain the first digital signal corresponding to the phase information.

In some embodiments, after the electronic certificate is verified, the second device sends a first channel sounding sequence to the first device. The first device may determine the phase information of the channel response based on the channel sounding sequence, and quantize the phase information to obtain the second digital signal corresponding to the phase information.

The blockchain accounting node compares the difference bits between the first digital signal and the second digital signal, thereby reconciling the difference bits to obtain the correct bit order, and writes the correct bit order and the electronic certificates of the first device and the second device into the smart contract, and publishes the correct bit order through the smart contract.

In some embodiments, the method further includes: obtaining the smart contract published by a blockchain device.

In some embodiments, the determining a shared key between the first device and the second device according to the first digital signal and the correct order of the difference bits includes: reconciling the first digital signal according to the correct order of the difference bits to obtain the shared key.

In this embodiment, the first device may obtain the correct bit order by calling the smart contract command, and correct the erroneous bits based on the existing string, thereby obtaining the shared key between the first device and the second device. The first device may use the shared key to encrypt information, and the second device may use the shared key to decrypt the information after receiving the information.

In the embodiments of the present disclosure, using the blockchain accounting node as a third party to reconcile information in key generation for ubiquitous network devices avoids the use of ubiquitous network terminal devices under resource-constrained conditions for information reconciliation, can reduce device energy consumption, ensure the accuracy of key generation, and at the same time avoid information leakage due to key negotiation between two communication devices when a secure and trusted connection is not established, thereby ensuring the security of communication information.

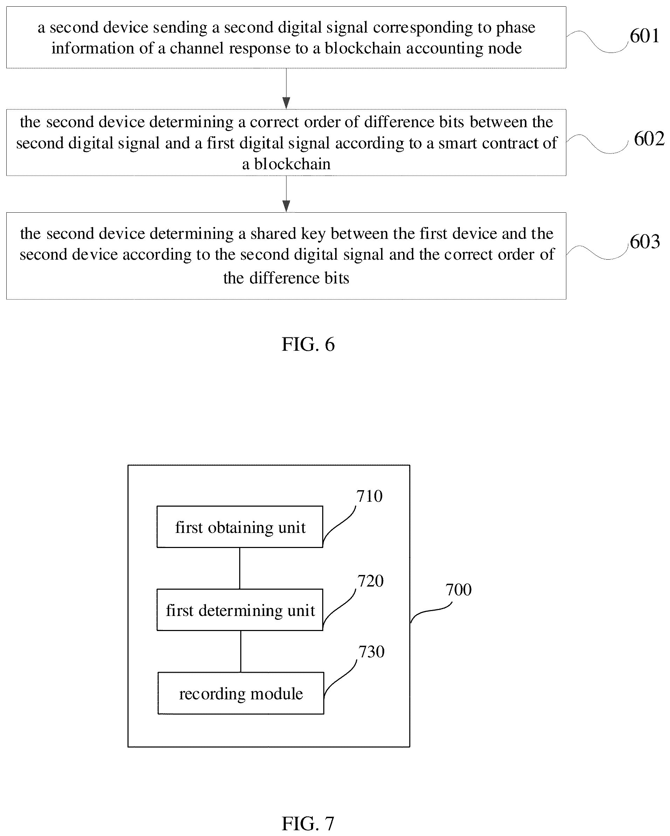

As shown in FIG. 6, an embodiment of the present disclosure further provides a key generation method, applied to a second device and including:

Step 601: a second device sending a second digital signal corresponding to phase information of a channel response to a blockchain accounting node;
Step 602: the second device determining a correct order of difference bits between the second digital signal and a first digital signal according to a smart contract of a blockchain, where the first digital signal is a digital signal corresponding to phase information of a channel response obtained by a first device;
Step 603: the second device determining a shared key between the first device and the second device according to the second digital signal and the correct order of the difference bits.

In this embodiment, during the system initialization phase, the first device and the second device need to register with a trusted authority (TA), which distributes a public-private key pair and a corresponding electronic certificate to each device. The first device and the second device respectively verify each other's electronic certificate. When the electronic certificate verification passes, the first device determines the phase information of the channel response according to the channel sounding sequence sent by the second device, and quantizes the phase information to obtain the first digital signal. The second device determines the phase information of the channel response according to the channel sounding sequence sent by the first device, and quantizes the phase information to obtain the second digital signal. The first device and the second device may upload the first digital signal and the second digital signal obtained by quantization to the blockchain accounting node for the blockchain accounting node to perform information reconciliation.

The blockchain accounting node may compare the difference bits between the first digital signal and the second digital signal, thereby reconciling the difference bits to obtain the correct bit order. The blockchain accounting node writes the correct bit order and the electronic certificates of the first device and the second device into the smart contract, and publishes the correct bit order through the smart contract. The first device and the second device may obtain the correct bit order by calling the smart contract and obtain the shared key through calculation based on the existing string.

In some embodiments, the method further includes:

determining the phase information of the channel response according to a second channel sounding sequence sent by the first device; and quantizing the phase information to obtain the second digital signal corresponding to the phase information.

In this embodiment, the first device and the second device complete the initial authentication of communication by verifying each other's electronic certificates. After the electronic certificate is verified, the first device sends a second channel sounding sequence to the second device. The second device may determine the phase information of the channel response according to the channel sounding sequence, and quantize the phase information to obtain the second digital signal corresponding to the phase information.

In some embodiments, the method further includes: obtaining the smart contract published by a blockchain device.

In some embodiments, the determining a shared key between the first device and the second device according to the second digital signal and the correct order of the difference bits includes: reconciling the second digital signal according to the correct order of the difference bits to obtain the shared key.

In this embodiment, the second device may obtain the correct bit order by calling the smart contract command, and correct the erroneous bits based on the existing string, thereby obtaining the shared key between the first device and the second device. The first device may use the shared key to encrypt information, and the second device may use the shared key to decrypt the information after receiving the information.

In the embodiments of the present disclosure, using the blockchain accounting node as a third party to reconcile information in key generation for ubiquitous network devices avoids the use of ubiquitous network terminal devices under resource-constrained conditions for information reconciliation, can reduce device energy consumption, ensure the accuracy of key generation, and at the same time avoid information leakage due to key negotiation between two communication devices when a secure and trusted connection is not established, thereby ensuring the security of communication information.

An embodiment of the present disclosure further provides an information reconciliation system for generating a key, including:

a blockchain device;
a blockchain accounting node, communicatively connected with the blockchain device;
a device, communicatively connected with the blockchain device and the blockchain accounting node, respectively, where the device includes a first device and a second device, the second device is a communication peer device of the first device;
where the first device is configured to send a first digital signal corresponding to phase information of a channel response to the blockchain accounting node; the second device is configured to send a second digital signal corresponding to the phase information of the channel response to the blockchain accounting node;
the blockchain accounting node is configured to determine a correct order of difference bits between the first digital signal and the second digital signal; and enter the correct order of the difference bits, an electronic certificate of the first device, and an electronic certificate of the second device into a smart contract of the blockchain device;
the blockchain device is configured to publish the smart contract.

In some embodiments, taking the system shown as including two blockchain accounting nodes as an example, the system architecture is shown in Fig. 2. The devices are ubiquitous network terminal devices that have the ability to communicate between devices, with accounting nodes, and blockchain networks. In a blockchain network, terminal devices do not participate in the operation and maintenance of the blockchain and may only view the public data of the blockchain network. The device may include a first device and a second device.

A blockchain device refers to a blockchain network platform participated by blockchain accounting nodes and ubiquitous network devices, and is a distributed, decentralized electronic account book. The trusted authority (TA) has the abilities to initialize system parameters, register network nodes, and publish key information and electronic certificates. The TA is not directly connected with the blockchain network.

The blockchain accounting node is a main node of a blockchain network, which is configured to provide computing power, operation and maintenance, and publish accounting information for the blockchain network; the blockchain accounting node may communicate with the device and provide authentication and information reconciliation capabilities for the device.

The blockchain accounting node can implement all the steps in the above-mentioned information reconciliation method for generating a key applied to the blockchain accounting node; the device can implement all the steps in the above-mentioned key generation methods applied to the first device and the second device side, which will not be repeated here.

In the embodiments of the present disclosure, by introducing a blockchain network architecture, using the accounting node in the blockchain network as a third party to reconcile information in key generation for ubiquitous network devices can avoid the use of ubiquitous network terminal devices under resource-constrained conditions for information reconciliation and reduce device energy consumption; and can also avoid information leakage due to key negotiation between two devices when a secure and trusted communication is not established.

The communication smart contract publishes key information in information reconciliation, and uses the immutable, open and transparent characteristics of the blockchain to ensure the credibility of the accounting node as a third party. At the same time, because of the programmable system of the smart contract, resource-constrained terminal devices can still call the information published by the smart contract through the program of the smart contract without completely storing the blockchain distributed account book.

The above embodiments introduce the information reconciliation method for generating a key and the key generation methods disclosed in the present disclosure. The following embodiments will further introduce the corresponding devices with reference to the accompanying drawings.

Specifically, as shown in FIG. 7, an embodiment of the present disclosure provides an information reconciliation apparatus 700 for generating a key, applied to a blockchain accounting node and including:

a first obtaining unit 710, configured to obtain a digital signal corresponding to phase information of a channel response, where the digital signal includes: a first digital signal corresponding to phase information obtained by a first device; a second digital signal corresponding to phase information obtained by a second device; the second device is a communication peer device of the first device;

a first determining unit 720, configured to determine a correct order of difference bits between the first digital signal and the second digital signal;

a recording module 730, configured to enter the correct order of the difference bits, an electronic certificate of the first device, and an electronic certificate of the second device into a smart contract of a blockchain device.

In some embodiments, the first obtaining unit 710 is specifically configured to perform at least one of the following:

receiving a first data packet sent by the first device, where the first data packet includes the first digital signal and the electronic certificate of the first device, the first digital signal is a digital signal obtained by encryption based on a public key of the blockchain accounting node;

receiving a second data packet sent by the second device, where the second data packet includes the second digital signal and the electronic certificate of the second device, the second digital signal is a digital signal obtained by encryption based on the public key of the blockchain accounting node.

In some embodiments, the apparatus further includes:

a verification unit, configured to verify credibility of the electronic certificate of the first device and the electronic certificate of the second device respectively according to a certificate revocation list (CRL) of a trusted authority (TA);

a first processing unit, configured to ignore the digital signal corresponding to the electronic certificate if the CRL includes the electronic certificate; and determine that verification of the electronic certificate is successful if the CRL does not include the electronic certificate.

In some embodiments, the first determining unit 720 is specifically configured to:

compare the first digital signal and the second digital signal to obtain a comparison result;
determine the difference bits between the first digital signal and the second digital signal according to the comparison result;
determine the correct order of the difference bits.

In some embodiments, the first determining unit 720 is specifically configured to:

determine the correct order of the difference bits in a case where it is determined according to the comparison result that the number of identical bits between the first digital signal and the second digital signal is greater than a first threshold.

It should be noted here that the above-mentioned apparatus provided by the embodiment of the present disclosure can implement all the method steps implemented by the above-mentioned method embodiment applied to the blockchain accounting node, and can achieve the same technical effects. The parts and beneficial effects of this embodiment that are the same as those of the method embodiment will not be described in detail here.

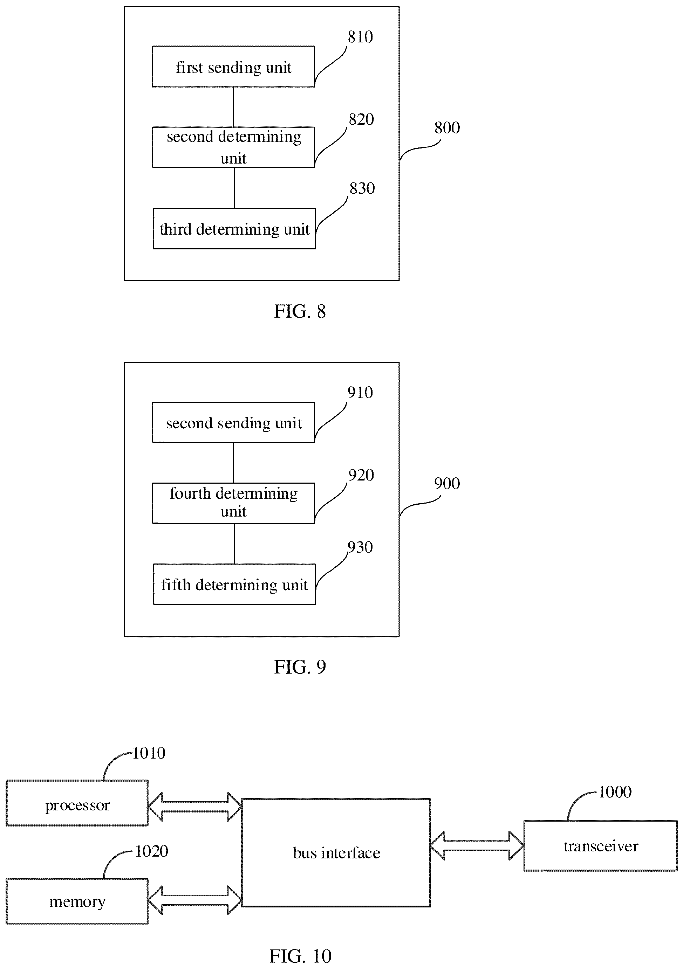

Specifically, as shown in FIG. 8, an embodiment of the present disclosure provides a key generation apparatus 600, applied to a first device and including:

a first sending unit 810, configured to send a first digital signal corresponding to phase information of a channel response to a blockchain accounting node;
a second determining unit 820, configured to determine a correct order of difference bits between the first digital signal and a second digital signal according to a smart contract of a blockchain, where the second digital signal is a digital signal corresponding to phase information of a channel response obtained by a second device;
a third determining unit 830, configured to determine a shared key between the first device and the second device according to the first digital signal and the correct order of the difference bits.

In some embodiments, the apparatus further includes:

a sixth determining unit, configured to determine the phase information of the channel response according to a first channel sounding sequence sent by the second device;
a second processing unit, configured to quantize the phase information to obtain the first digital signal corresponding to the phase information.

In some embodiments, the apparatus further includes:
a second obtaining module, configured to obtain the smart contract published by a blockchain device.

In some embodiments, the third determining unit 830 is specifically configured to:
reconcile the first digital signal according to the correct order of the difference bits to obtain the shared key.

It should be noted here that the above-mentioned apparatus provided by the embodiment of the present disclosure can implement all the method steps implemented by the above-mentioned method embodiment applied to the first device, and can achieve the same technical effects. The parts and beneficial effects of this embodiment that are the same as those of the method embodiment will not be described in detail here.

Specifically, as shown in FIG. 9, an embodiment of the present disclosure provides a key generation apparatus 900, applied to a second device and including:

a second sending unit 910, configured to send a second digital signal corresponding to phase information of a channel response to a blockchain accounting node;
a fourth determining unit 920, configured to determine a correct order of difference bits between the second digital signal and a first digital signal according to a smart contract of a blockchain, where the first digital signal is a digital signal corresponding to phase information of a channel response obtained by a first device;
a fifth determining unit 930, configured to determine a shared key between the first device and the second device according to the second digital signal and the correct order of the difference bits.

In some embodiments, the apparatus further includes:

a seventh determining unit, configured to determine the phase information of the channel response according to a second channel sounding sequence sent by the first device;
a third processing unit, configured to quantize the phase information to obtain the second digital signal corresponding to the phase information.

In some embodiments, the fifth determining unit 930 is specifically configured to:
reconcile the second digital signal according to the correct order of the difference bits to obtain the shared key.

It should be noted here that the above-mentioned apparatus provided by the embodiment of the present disclosure can implement all the method steps implemented by the above-mentioned method embodiment applied to the second device, and can achieve the same technical effects. The parts and beneficial effects of this embodiment that are the same as those of the method embodiment will not be described in detail here.

It should be noted that the division of units in the embodiment of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to perform all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

As shown in FIG. 10, an embodiment of the present disclosure further provides a network device, which may be a blockchain accounting node, including: a memory 1020, a transceiver 1000, and a processor 1010; where the memory 1020 is configured to store a computer program; the transceiver 1000 is configured to receive and transmit data under the control of the processor 1010; and the processor 1010 is configured to read the computer program in the memory and perform following operations:

> obtaining a digital signal corresponding to phase information of a channel response, where the digital signal includes: a first digital signal corresponding to phase information obtained by a first device; a second digital signal corresponding to phase information obtained by a second device; the second device is a communication peer device of the first device; determining a correct order of difference bits between the first digital signal and the second digital signal;
> the blockchain accounting node entering the correct order of the difference bits, an electronic certificate of the first device, and an electronic certificate of the second device into a smart contract of a blockchain device.

In some embodiments, the processor is configured to read the computer program in the memory and perform at least one of the following operations:

> receiving a first data packet sent by the first device, where the first data packet includes the first digital signal and the electronic certificate of the first device, the first digital signal is a digital signal obtained by encryption based on a public key of a blockchain accounting node;
> receiving a second data packet sent by the second device, where the second data packet includes the second digital signal and the electronic certificate of the second device, the second digital signal is a digital signal obtained by encryption based on the public key of the blockchain accounting node.

In some embodiments, the processor is configured to read the computer program in the memory and perform following operations:

> verifying credibility of the electronic certificate of the first device and the electronic certificate of the second device respectively according to a certificate revocation list (CRL) of a trusted authority (TA); ignoring the digital signal corresponding to the electronic certificate if the CRL includes the electronic certificate; and determining that verification of the electronic certificate is successful if the CRL does not include the electronic certificate.

In some embodiments, the processor is configured to read the computer program in the memory and perform following operations:

> comparing the first digital signal and the second digital signal to obtain a comparison result; determining the difference bits between the first digital signal and the second digital signal according to the comparison result; determining the correct order of the difference bits.

In some embodiments, the processor is configured to read the computer program in the memory and perform following operations:
determining the correct order of the difference bits in a case where it is determined according to the comparison result that the number of identical bits between the first digital signal and the second digital signal is greater than a first threshold.

In FIG. 10, the bus architecture may include any number of interconnected buses and bridges, specifically linking various circuits of one or more processors represented by the processor 1010 and a memory represented by the memory 1020 together. The bus architecture may also link together various other circuits such as peripheral devices, voltage regulators, and power management circuits, which are all well known in the art and, therefore, will not be described further herein. The bus interface provides the interface. The transceiver 1000 may be a plurality of elements, i.e., including a transmitter and a transceiver, providing a means for communicating with various other devices over a transmission medium. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field programmable gate array (FPGA), or a complex programmable logic device (CPLD). The processor may also adopt a multi-core architecture.

It should be noted here that the above-mentioned network device provided by the embodiment of the present disclosure can implement all the method steps implemented by the above-mentioned method embodiment applied to the blockchain accounting node, and can achieve the same technical effects. The parts and beneficial effects of this embodiment that are the same as those of the method embodiment will not be described in detail here.

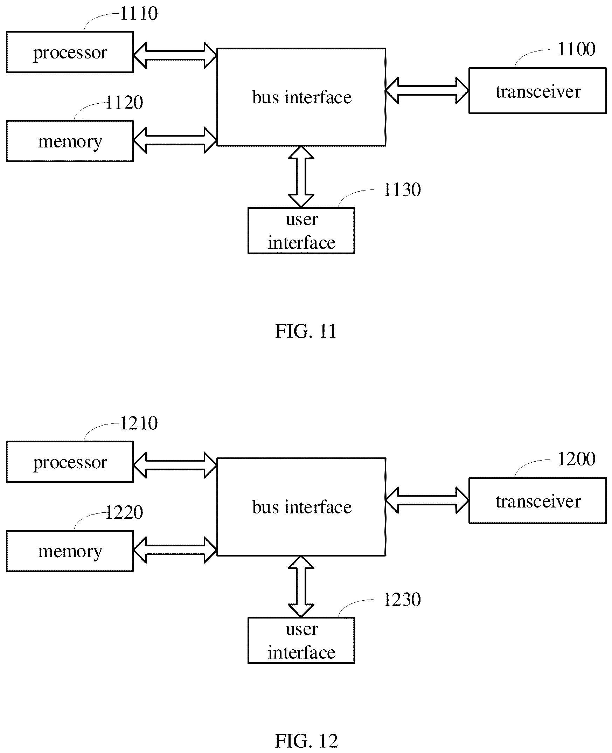

As shown in FIG. 11, an embodiment of the present disclosure further provides a terminal, which may be a first device, including: a memory 1120, a transceiver 1100, and a processor 1110; where the memory 1120 is configured to store a computer program; the transceiver 1100 is configured to receive and transmit data under the control of the processor 1110; and the processor 1110 is configured to read the computer program in the memory and perform following operations:

sending a first digital signal corresponding to phase information of a channel response to a blockchain accounting node;

determining a correct order of difference bits between the first digital signal and a second digital signal according to a smart contract of a blockchain, where the second digital signal is a digital signal corresponding to phase information of a channel response obtained by a second device;

determining a shared key between the first device and the second device according to the first digital signal and the correct order of the difference bits.

In some embodiments, the processor is configured to read the computer program in the memory and perform following operations:

determining the phase information of the channel response according to a first channel sounding sequence sent by the second device;

quantizing the phase information to obtain the first digital signal corresponding to the phase information.

In some embodiments, the processor is configured to read the computer program in the memory and perform following operations:
obtaining the smart contract published by a blockchain device.

In some embodiments, the processor is configured to read the computer program in the memory and perform following operations:
reconciling the first digital signal according to the correct order of the difference bits to obtain the shared key.

In FIG. 11, the bus architecture may include any number of interconnected buses and bridges, specifically linking various circuits of one or more processors represented by the processor 1110 and a memory represented by the memory 1120 together. The bus architecture may also link together various other circuits such as peripheral devices, voltage regulators, and power management circuits, which are all well known in the art and, therefore, will not be described further herein. The bus interface provides the interface. The transceiver 1100 may be a plurality of elements, i.e., including a transmitter and a transceiver, providing a means for communicating with various other devices over a transmission medium. For different user devices, the user interface 1130 may also be an interface capable of connecting to external or internal devices as required, and the connected devices include but are not limited to a keypad, a display, a speaker, a microphone, a joystick, and the like.

The processor 1110 is responsible for managing the bus architecture and general processing, and the memory 1120 may store data used by the processor 1110 when performing operations.

In some embodiments, the processor 1110 may be a central processing unit (CPU), an application specific integrated circuit (ASIC), a field programmable gate array (FPGA), or a complex programmable logic device (CPLD). The processor may also adopt a multi-core architecture.

The processor calls the computer program stored in the memory to perform any of the methods provided in the embodiments of the present disclosure according to the obtained executable instructions. The processor and the memory may also be physically separated.

It should be noted here that the above-mentioned terminal provided by the embodiment of the present disclosure can implement all the method steps implemented by the above-mentioned method embodiment applied to the first device, and can achieve the same technical effects. The parts and beneficial effects of this embodiment that are the same as those of the method embodiment will not be described in detail here.

As shown in FIG. 12, an embodiment of the present disclosure further provides a terminal, which may be a second device, including: a memory 1220, a transceiver 1200, and a processor 1210; where the memory 1220 is configured to store a computer program; the transceiver 1200 is configured to receive and transmit data under the control of the processor 1210; and the processor 1210 is configured to read the computer program in the memory and perform following operations:

sending a second digital signal corresponding to phase information of a channel response to a blockchain accounting node;

determining a correct order of difference bits between the second digital signal and a first digital signal according to a smart contract of a blockchain, where the first digital signal is a digital signal corresponding to phase information of a channel response obtained by a first device;

determining a shared key between the first device and the second device according to the second digital signal and the correct order of the difference bits.

In some embodiments, the processor is configured to read the computer program in the memory and perform following operations:

> determining the phase information of the channel response according to a second channel sounding sequence sent by the first device;
> quantizing the phase information to obtain the second digital signal corresponding to the phase information.

In some embodiments, the processor is configured to read the computer program in the memory and perform following operations:
reconciling the second digital signal according to the correct order of the difference bits to obtain the shared key.

In FIG. 12, the bus architecture may include any number of interconnected buses and bridges, specifically linking various circuits of one or more processors represented by the processor 1210 and a memory represented by the memory 1220 together. The bus architecture may also link together various other circuits such as peripheral devices, voltage regulators, and power management circuits, which are all well known in the art and, therefore, will not be described further herein. The bus interface provides the interface. The transceiver 1200 may be a plurality of elements, i.e., including a transmitter and a transceiver, providing a means for communicating with various other devices over a transmission medium. For different user devices, the user interface 1230 may also be an interface capable of connecting to external or internal devices as required, and the connected devices include but are not limited to a keypad, a display, a speaker, a microphone, a joystick, and the like.

The processor 1210 is responsible for managing the bus architecture and general processing, and the memory 1220 may store data used by the processor 1210 when performing operations.

In some embodiments, the processor 1210 may be a central processing unit (CPU), an application specific integrated circuit (ASIC), a field programmable gate array (FPGA), or a complex programmable logic device (CPLD). The processor may also adopt a multi-core architecture.

The processor calls the computer program stored in the memory to perform any of the methods provided in the embodiments of the present disclosure according to the obtained executable instructions. The processor and the memory may also be physically separated.

It should be noted here that the above-mentioned terminal provided by the embodiment of the present disclosure can implement all the method steps implemented by the above-mentioned method embodiment applied to the second device, and can achieve the same technical effects. The parts and beneficial effects of this embodiment that are the same as those of the method embodiment will not be described in detail here.

In addition, a specific embodiment of the present disclosure further provides a processor-readable storage medium on which a computer program is stored, where when the program is executed by a processor, the steps of the information reconciliation method for generating a key as described above are implemented and the same technical effects can be achieved. To avoid repetition, it will not be repeated here.

A specific embodiment of the present disclosure further provides a processor-readable storage medium on which a computer program is stored, where when the program is executed by a processor, the steps of the key generation method as described above are implemented and the same technical effects can be achieved. To avoid repetition, it will not be repeated here.

The readable storage medium may be any available medium or data storage device that may be accessed by the processor, including but not limited to magnetic storage (such as floppy disk, hard disk, magnetic tape, magneto-optical (MO), etc.), optical storage (such as compact disc (CD), digital video disc (DVD), Blu-ray disc (BD), high-definition versatile disc (HVD), etc.), and semiconductor memory (such as ROM, erasable programmable read-only memory (EPROM), electrically erasable programmable read only memory (EEPROM), non-volatile memory (NAND FLASH), solid state disk or solid state drive (SSD)), etc.

It should be noted that the technical solutions provided by the embodiments of the present disclosure may be applied to a variety of systems, especially 5G systems. For example, applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal devices and network devices. The system may also include core network parts, such as the Evolved Packet System (EPS), 5G System (5GS), etc.

The terminal device involved in the embodiments of the present disclosure may be a device that provides voice and/or data connectivity to a user, a handheld device with a wireless connection function, or other processing devices connected to a wireless modem. In different systems, the name of the terminal device may also be different. For example, in the 5G system, the terminal device may be called User Equipment (UE). Radio terminal devices may communicate with one or more core networks (CN) via a radio access network (RAN). Radio terminal devices may be mobile terminal devices, such as mobile phones (or "cellular" phones) and computers with mobile terminal devices, for example, portable, pocket-sized, handheld, computer-built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistants (PDAs), and the like. The radio terminal device may also be referred to as a system, a subscriber unit, a subscriber station, a mobile station, a mobile, a remote station, an access point, a remote terminal device, an access terminal device, a user terminal device, a user agent, or a user device, but is not limited in the embodiments of the present disclosure.

The network device involved in the embodiments of the present disclosure may be a base station, which may include multiple cells providing services for the terminal. Depending on the specific application scenario, the base station may also be called an access point, or may be a device in an access network that communicates with radio terminal devices through one or more sectors on the air interface, or may be called another name. The network device may be used to convert received air frames into and out of Internet Protocol (IP) packets, acting as a router between the radio terminal device and the rest of the access network, which may include an Internet Protocol (IP) communication network. The network device also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., but is not limited in the embodiments of the present disclosure. In some network structures, network devices may include centralized unit (CU) nodes and distributed unit (DU) nodes, and the centralized unit and the distributed unit may also be arranged geographically separately.

Network devices and terminal devices may each use one or more antennas for Multiple Input Multi Output (MIMO) transmission. MIMO transmission may be single user MIMO (SU-MIMO) or multiple user MIMO (MU-MIMO). Depending on the form and number of antenna combinations, MIMO transmission may be two-dimension MIMO (2D-MIMO), three-dimension MIMO (3D-MIMO), full-dimension MIMO (FD-MIMO), or massive MIMO, or may also be diversity transmission, precoding transmission, or beamforming transmission.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage and optical storage, etc.) containing computer-usable program codes.

The present disclosure is described with reference to flowcharts and/or block diagrams of methods, apparatus (systems), and computer program products according to embodiments of the disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to a processor of a general-purpose computer, a special-purpose computer, an embedded processing machine, or other programmable data processing device to produce a machine, so that the instructions executed by the processor of the computer or other programmable data processing device produce a device for implementing the functions specified in one or more processes in the flowchart and/or one or more blocks in the block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

It should be noted that, it should be understood that the division of the above modules is merely a division of logical functions, and in actual implementation, they may be fully or partially integrated into one physical entity, or they may be physically separated. These modules may all be implemented in the form of software called by processing elements; or may also all be implemented in the form of hardware; or some modules may be implemented in the form of software called by processing elements, and some modules may be implemented in the form of hardware. For example, a determination module may be a separately established processing element, or may be integrated into a chip of the above-mentioned device. In addition, it may also be stored in the memory of the above-mentioned device in the form of program code, and called by a processing element of the above-mentioned device to perform the function of the above-mentioned determination module. The implementation of other modules is similar. In addition, all or part of these modules may be integrated together or implemented independently. The processing element mentioned here may be an integrated circuit having a signal processing capability. During implementation, each step of the above method or each module above may be completed by an integrated logic circuit of hardware in a processor element or by instructions in the form of software.

For example, each module, unit, sub-unit or sub-module may be one or more integrated circuits configured to implement the above method, such as: one or more application specific integrated circuits (ASICs), or, one or more microprocessors (digital signal processors, DSPs), or, one or more field programmable gate arrays (FPGAs), etc. For another example, when a certain module above is implemented in the form of a processing element scheduling a program code, the processing element may be a general-purpose processor, such as a central processing unit (CPU) or other processor that may call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or apparatus that includes a series of steps or elements is not necessarily limited to those steps or elements expressly listed but may include other steps or elements not expressly listed or inherent to such process, method, product or apparatus. In addition, the use of "and/or" in the specification and claims indicates at least one of the connected objects, for example, A and/or B and/or C, indicating seven situations including A alone, B alone, C alone, both A and B exist, both B and C exist, both A and C exist, and A, B and C exist. Similarly, the use of "at least one of A and B" in this specification and claims should be understood as "A alone, B alone, or both A and B exist".

Obviously, those skilled in the art may make various modifications and variations to the present disclosure without departing from the spirit and scope of the present disclosure. Thus, if these modifications and variations of the present disclosure fall within the scope of the claims of the present disclosure and their equivalents, the present disclosure is intended to include these modifications and variations.

**Claims**

1. An information reconciliation method for generating a key, comprising:

   a blockchain accounting node obtaining a digital signal corresponding to phase information of a channel response, wherein the digital signal comprises: a first digital signal corresponding to phase information obtained by a first device; a second digital signal corresponding to phase information obtained by a second device; the second device is a communication peer device of the first device;
   the blockchain accounting node determining a correct order of difference bits between the first digital signal and the second digital signal;
   the blockchain accounting node entering the correct order of the difference bits, an electronic certificate of the first device, and an electronic certificate of the second device into a smart contract of a blockchain device.

2. The method according to claim 1, wherein the obtaining a digital signal corresponding to phase information of a channel response comprises at least one of the following:

   receiving a first data packet sent by the first device, wherein the first data packet comprises the first digital signal and the electronic certificate of the first device, the first digital signal is a digital signal obtained by encryption based on a public key of the blockchain accounting node;
   receiving a second data packet sent by the second device, wherein the second data packet comprises the second digital signal and the electronic certificate of the second device, the second digital signal is a digital signal obtained by encryption based on the public key of the blockchain accounting node.

3. The method according to claim 2, further comprising:

   verifying credibility of the electronic certificate of the first device and the electronic certificate of the second device respectively according to a certificate revocation list (CRL) of a trusted authority (TA);
   ignoring the digital signal corresponding to the electronic certificate if the CRL comprises the electronic certificate; and determining that verification of the electronic certificate is successful if the CRL does not comprise the electronic certificate.

4. The method according to claim 1, wherein the determining a correct order of difference bits between the first digital signal and the second digital signal comprises:

comparing the first digital signal and the second digital signal to obtain a comparison result;
determining the difference bits between the first digital signal and the second digital signal according to the comparison result;
determining the correct order of the difference bits.

5. The method according to claim 4, wherein the determining the correct order of the difference bits comprises:
determining the correct order of the difference bits in a case where it is determined according to the comparison result that the number of identical bits between the first digital signal and the second digital signal is greater than a first threshold.

6. A key generation method, comprising:

a first device sending a first digital signal corresponding to phase information of a channel response to a blockchain accounting node;
the first device determining a correct order of difference bits between the first digital signal and a second digital signal according to a smart contract of a blockchain, wherein the second digital signal is a digital signal corresponding to phase information of a channel response obtained by a second device;
the first device determining a shared key between the first device and the second device according to the first digital signal and the correct order of the difference bits.

7. The method according to claim 6, further comprising:

determining the phase information of the channel response according to a first channel sounding sequence sent by the second device;
quantizing the phase information to obtain the first digital signal corresponding to the phase information.

8. The method according to claim 6, further comprising:
obtaining the smart contract published by a blockchain device.

9. The method according to claim 6, wherein the determining a shared key between the first device and the second device according to the first digital signal and the correct order of the difference bits comprises:
reconciling the first digital signal according to the correct order of the difference bits to obtain the shared key.

10. A key generation method, comprising:

a second device sending a second digital signal corresponding to phase information of a channel response to a blockchain accounting node;
the second device determining a correct order of difference bits between the second digital signal and a first digital signal according to a smart contract of a blockchain, wherein the first digital signal is a digital signal corresponding to phase information of a channel response obtained by a first device;
the second device determining a shared key between the first device and the second device according to the second digital signal and the correct order of the difference bits.

11. The method according to claim 10, further comprising:

determining the phase information of the channel response according to a second channel sounding sequence sent by the first device;
quantizing the phase information to obtain the second digital signal corresponding to the phase information.

12. The method according to claim 10, wherein the determining a shared key between the first device and the second device according to the second digital signal and the correct order of the difference bits comprises:
reconciling the second digital signal according to the correct order of the difference bits to obtain the shared key.

13. An information reconciliation system for generating a key, comprising:

a blockchain device;
a blockchain accounting node, communicatively connected with the blockchain device;
a device, communicatively connected with the blockchain device and the blockchain accounting node, respectively, wherein the device comprises a first device and a second device, the second device is a communication peer device of the first device;
wherein the first device is configured to send a first digital signal corresponding to phase information of a channel response to the blockchain accounting node; the second device is configured to send a second digital signal corresponding to the phase information of the channel response to the blockchain accounting node; the blockchain accounting node is configured to determine a correct order of difference bits between the first digital signal and the second digital signal; and enter the correct order of the difference bits, an electronic certificate of the first device, and an electronic certificate of the second device into a smart contract of the blockchain device; the blockchain device is configured to publish the smart contract.

14. A network device, comprising: a memory, a transceiver, and a processor:
wherein the memory is configured to store a computer program; the transceiver is configured to receive and transmit data under the control of the processor; and the processor is configured to read the computer program in the memory and perform following operations:

   obtaining a digital signal corresponding to phase information of a channel response, wherein the digital signal comprises: a first digital signal corresponding to phase information obtained by a first device; a second digital signal corresponding to phase information obtained by a second device; the second device is a communication peer device of the first device; determining a correct order of difference bits between the first digital signal and the second digital signal; entering the correct order of the difference bits, an electronic certificate of the first device, and an electronic certificate of the second device into a smart contract of a blockchain device.

15. The network device according to claim 14, wherein the processor is configured to read the computer program in the memory and perform at least one of the following operations:

   receiving a first data packet sent by the first device, wherein the first data packet comprises the first digital signal and the electronic certificate of the first device, the first digital signal is a digital signal obtained by encryption based on a public key of a blockchain accounting node; receiving a second data packet sent by the second device, wherein the second data packet comprises the second digital signal and the electronic certificate of the second device, the second digital signal is a digital signal obtained by encryption based on the public key of the blockchain accounting node.

16. The network device according to claim 15, wherein the processor is configured to read the computer program in the memory and perform following operations:

   verifying credibility of the electronic certificate of the first device and the electronic certificate of the second device respectively according to a certificate revocation list (CRL) of a trusted authority (TA); ignoring the digital signal corresponding to the electronic certificate if the CRL comprises the electronic certificate; and determining that verification of the electronic certificate is successful if the CRL does not comprise the electronic certificate.

17. The network device according to claim 14, wherein the processor is configured to read the computer program in the memory and perform following operations:

   comparing the first digital signal and the second digital signal to obtain a comparison result; determining the difference bits between the first digital signal and the second digital signal according to the comparison result; determining the correct order of the difference bits.

18. The network device according to claim 17, wherein the processor is configured to read the computer program in the memory and perform following operations:
determining the correct order of the difference bits in a case where it is determined according to the comparison result that the number of identical bits between the first digital signal and the second digital signal is greater than a first threshold.

19. A terminal, comprising: a memory, a transceiver, and a processor:
wherein the memory is configured to store a computer program; the transceiver is configured to receive and transmit data under the control of the processor; and the processor is configured to read the computer program in the memory and perform following operations:

   sending a first digital signal corresponding to phase information of a channel response to a blockchain accounting node; determining a correct order of difference bits between the first digital signal and a second digital signal according to a smart contract of a blockchain, wherein the second digital signal is a digital signal corresponding to phase information of a channel response obtained by a second device;

determining a shared key between the first device and the second device according to the first digital signal and the correct order of the difference bits.

20. The terminal according to claim 19, wherein the processor is configured to read the computer program in the memory and perform following operations:

determining the phase information of the channel response according to a first channel sounding sequence sent by the second device; quantizing the phase information to obtain the first digital signal corresponding to the phase information.

21. The terminal according to claim 19, wherein the processor is configured to read the computer program in the memory and perform following operations:
obtaining the smart contract published by a blockchain device.

22. The terminal according to claim 19, wherein the processor is configured to read the computer program in the memory and perform following operations:
reconciling the first digital signal according to the correct order of the difference bits to obtain the shared key.

23. A terminal, comprising: a memory, a transceiver, and a processor:
wherein the memory is configured to store a computer program; the transceiver is configured to receive and transmit data under the control of the processor; and the processor is configured to read the computer program in the memory and perform following operations:

sending a second digital signal corresponding to phase information of a channel response to a blockchain accounting node; determining a correct order of difference bits between the second digital signal and a first digital signal according to a smart contract of a blockchain, wherein the first digital signal is a digital signal corresponding to phase information of a channel response obtained by a first device; determining a shared key between the first device and the second device according to the second digital signal and the correct order of the difference bits.

24. The terminal according to claim 23, wherein the processor is configured to read the computer program in the memory and perform following operations:

determining the phase information of the channel response according to a second channel sounding sequence sent by the first device; quantizing the phase information to obtain the second digital signal corresponding to the phase information.

25. The terminal according to claim 23, wherein the processor is configured to read the computer program in the memory and perform following operations:
reconciling the second digital signal according to the correct order of the difference bits to obtain the shared key.

26. An information reconciliation apparatus for generating a key, comprising:

a first obtaining unit, configured to obtain a digital signal corresponding to phase information of a channel response, wherein the digital signal comprises: a first digital signal corresponding to phase information obtained by a first device; a second digital signal corresponding to phase information obtained by a second device; the second device is a communication peer device of the first device; a first determining unit, configured to determine a correct order of difference bits between the first digital signal and the second digital signal; a recording module, configured to enter the correct order of the difference bits, an electronic certificate of the first device, and an electronic certificate of the second device into a smart contract of a blockchain device.

27. The apparatus according to claim 26, wherein the first obtaining unit is specifically configured to perform at least one of the following:

receiving a first data packet sent by the first device, wherein the first data packet comprises the first digital signal and the electronic certificate of the first device, the first digital signal is a digital signal obtained by encryption based on a public key of the blockchain accounting node; receiving a second data packet sent by the second device, wherein the second data packet comprises the second digital signal and the electronic certificate of the second device, the second digital signal is a digital signal obtained by encryption based on the public key of the blockchain accounting node.

28. The apparatus according to claim 27, further comprising:

a verification unit, configured to verify credibility of the electronic certificate of the first device and the electronic certificate of the second device respectively according to a certificate revocation list (CRL) of a trusted authority (TA); a first processing unit, configured to ignore the digital signal corresponding to the electronic certificate if the CRL comprises the electronic certificate; and determine that verification of the electronic certificate is successful if the CRL does not comprise the electronic certificate.

29. The apparatus according to claim 26, wherein the first determining unit is specifically configured to:

compare the first digital signal and the second digital signal to obtain a comparison result; determine the difference bits between the first digital signal and the second digital signal according to the comparison result; determine the correct order of the difference bits.

30. The apparatus according to claim 29, wherein the first determining unit is specifically configured to: determine the correct order of the difference bits in a case where it is determined according to the comparison result that the number of identical bits between the first digital signal and the second digital signal is greater than a first threshold.

31. A key generation apparatus, comprising:

a first sending unit, configured to send a first digital signal corresponding to phase information of a channel response to a blockchain accounting node; a second determining unit, configured to determine a correct order of difference bits between the first digital signal and a second digital signal according to a smart contract of a blockchain, wherein the second digital signal is a digital signal corresponding to phase information of a channel response obtained by a second device; a third determining unit, configured to determine a shared key between the first device and the second device according to the first digital signal and the correct order of the difference bits.

32. The apparatus according to claim 31, further comprising:

a sixth determining unit, configured to determine the phase information of the channel response according to a first channel sounding sequence sent by the second device;

a second processing unit, configured to quantize the phase information to obtain the first digital signal corresponding to the phase information.

33. The apparatus according to claim 31, further comprising:
a second obtaining module, configured to obtain the smart contract published by a blockchain device.

34. The apparatus according to claim 31, wherein the third determining unit is specifically configured to: reconcile the first digital signal according to the correct order of the difference bits to obtain the shared key.

35. A key generation apparatus, comprising:

a second sending unit, configured to send a second digital signal corresponding to phase information of a channel response to a blockchain accounting node; a fourth determining unit, configured to determine a correct order of difference bits between the second digital signal and a first digital signal according to a smart contract of a blockchain, wherein the first digital signal is a digital signal corresponding to phase information of a channel response obtained by a first device; a fifth determining unit, configured to determine a shared key between the first device and the second device according to the second digital signal and the correct order of the difference bits.

36. The apparatus according to claim 35, further comprising:

a seventh determining unit, configured to determine the phase information of the channel response according to a second channel sounding sequence sent by the first device; a third processing unit, configured to quantize the phase information to obtain the second digital signal corresponding to the phase information.

37. The apparatus according to claim 35, wherein the fifth determining unit is specifically configured to: reconcile the second digital signal according to the correct order of the difference bits to obtain the shared key.

38. A processor-readable storage medium, storing a computer program, wherein the computer program, when executed by a processor, implements the steps of the information reconciliation method for generating a key according to any one of claims 1 to 5.

**39.** A processor-readable storage medium, storing a computer program, wherein the computer program, when executed by a processor, implements the steps of the key generation method according to any one of claims 6 to 9.

**40.** A processor-readable storage medium, storing a computer program, wherein the computer program, when executed by a processor, implements the steps of the key generation method according to any one of claims 10 to 12.

a blockchain accounting node obtaining a digital signal corresponding to phase information of a channel response, where the digital signal includes: a first digital signal corresponding to phase information obtained by a first device; a second digital signal corresponding to phase information obtained by a second device — 101

the blockchain accounting node determining a correct order of difference bits between the first digital signal and the second digital signal — 102

the blockchain accounting node entering the correct order of the difference bits, an electronic certificate of the first device, and an electronic certificate of the second device into a smart contract of a blockchain device — 103

FIG. 1

TA

accounting node 1 | blockchain device | accounting node 2

device 1 | device 2

FIG. 2

the devices encrypt the digital signal obtained after quantization and send it to the blockchain accounting node — 31

the blockchain accounting node verifies whether the information is credible by querying the CRL — 32

the blockchain accounting node performs a reconciliation operation on the difference bits to obtain the correct order — 33

the blockchain accounting node writes the correct order of the difference bits into the smart contract — 34

the devices may call the smart contract to obtain the correct order of the difference bits and combine it with the existing string to obtain the shared key through operation — 35

FIG. 3

| device 1 | TA | device 2 | accounting node 1 |
| --- | --- | --- | --- |

41: initialize the system

42: register with the TA and obtain the public-private key pair and the electronic certificate

42: register with the TA and obtain the public-private key pair and the electronic certificate

43: send the communication request

44a: verify the electronic certificate and the signature of device 1, and send the communication response after the verification is successful

44b: verify the electronic certificate and the signature of device 2

45: send the second channel sounding sequence

46: send the first channel sounding sequence

47: calculate the final phase of the channel response

48: calculate the final phase of the channel response

49: quantize the phase information

49: quantize the phase information

410: the quantized result is encrypted using the public key of accounting node 1 and then sent to accounting node 1

410: the quantized result is encrypted using the public key of accounting node 1 and then sent to accounting node 1

411: verify whether the electronic certificate in the received data packet is credible

412: perform the information reconciliation operation to obtain the correct order of the difference bits

413: write into the smart contract of the blockchain and publish

414: call the smart contract, and obtain the shared key through calculation

414: call the smart contract, and obtain the shared key through calculation

415: device 1 encrypts the information by using the shared key, and device 2 decrypts the information by using the shared key

FIG. 4

a first device sending a first digital signal corresponding to phase information of a channel response to a blockchain accounting node — 501

the first device determining a correct order of difference bits between the first digital signal and a second digital signal according to a smart contract of a blockchain — 502

the first device determining a shared key between the first device and the second device according to the first digital signal and the correct order of the difference bits — 503

FIG. 5

a second device sending a second digital signal corresponding to phase information of a channel response to a blockchain accounting node 601

the second device determining a correct order of difference bits between the second digital signal and a first digital signal according to a smart contract of a blockchain 602

the second device determining a shared key between the first device and the second device according to the second digital signal and the correct order of the difference bits 603

FIG. 6

first obtaining unit 710

first determining unit 720

recording module 730

700

FIG. 7

810

first sending unit

820

second determining unit

800

830

third determining unit

FIG. 8

910

second sending unit

920

fourth determining unit

900

930

fifth determining unit

FIG. 9

1010

processor

1020

memory

bus interface

1000

transceiver

FIG. 10

1110

processor

bus interface

1100

transceiver

1120

memory

1130

user
interface

FIG. 11

1210

processor

bus interface

1200

transceiver

1220

memory

1230

user
interface

FIG. 12

## INTERNATIONAL SEARCH REPORT

| International application No. |
|---|
| **PCT/CN2024/080664** |

| A. | CLASSIFICATION OF SUBJECT MATTER |
|---|---|

H04W12/041(2021.01)i; H04L9/08(2006.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI: 区块链, 记账, 智能合约, 物理层, 密钥, 比特, 差异, 区别, 调和, 纠正, 纠错, 协调, 协同, 协商, blockchain, smart contract, physical layer, key, bit, difference, variation, reconcile, negotiate, correct, rectify

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 101998390 A (HUAWEI TECHNOLOGIES CO., LTD.) 30 March 2011 (2011-03-30) description, paragraphs [0026]-[0045] and [0081]-[0095] | 1-40 |
| A | CN 112788599 A (SOUTHEAST UNIVERSITY) 11 May 2021 (2021-05-11) entire document | 1-40 |
| A | US 2017048064 A1 (ROBERT BOSCH GMBH) 16 February 2017 (2017-02-16) entire document | 1-40 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2024** | **26 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080664**

| Patent document cited in search report | | | Publication date (day/month/year) | Patent family member(s) | | | Publication date (day/month/year) |
|---|---|---|---|---|---|---|---|
| CN | 101998390 | A | 30 March 2011 | WO | 2011023129 | A1 | 03 March 2011 |
| CN | 112788599 | A | 11 May 2021 | CN | 112788599 | B | 27 May 2022 |
| US | 2017048064 | A1 | 16 February 2017 | US | 10396986 | B2 | 27 August 2019 |
| | | | | DE | 102015215569 | A1 | 16 February 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310656508